**Europäisches Patentamt**

**European Patent Office**

**Office européen des brevets**

(11) Veröffentlichungsnummer: **0 340 387**
**A2**

(12) **EUROPÄISCHE PATENTANMELDUNG**

(21) Anmeldenummer: **89101993.7**

(22) Anmeldetag: **06.02.89**

(30) Priorität: **07.04.88 DE 3811589**

(43) Veröffentlichungstag der Anmeldung:
**08.11.89 Patentblatt 89/45**

(84) Benannte Vertragsstaaten:
**AT BE CH DE FR GB LI NL SE**

(51) Int. Cl.⁴: **A47J 31/057 , H05B 3/06**

(71) Anmelder: **Braun Aktiengesellschaft**
**Rüsselsheimer Strasse 22**
**D-6000 Frankfurt/Main(DE)**

(72) Erfinder: **Henning, Hans-Jürgen**
**Falkensteiner Strasse 36**
**D-6240 Königstein 2(DE)**

(54) **Getränkezubereitungsmaschine, insbesondere für Kaffee oder Tee.**

㊼ Bei einer Getränkezubereitungsmaschine (1) bestehen die unterhalb eines Durchlauferhitzers (7) zu verlegenden Stromleiter aus mehreren, aus Blech ausgestanzten Metallbahnen (17, 39, 40, 40´, 40˝, 71), wobei die Metallbahnen auf einem aus Isolierstoff hergestellten Träger (30) und der Träger (30) selbst im Gerätesockel (2) der Getränkezubereitungsmaschine (1) befestigt sind. Die dem Durchlauferhitzer (7), dem Schalter (59) und dem Anschlußkabel (48) zugeordneten Enden (41, 42, 43, 16, 58, 63, 65) der Stromleiter (17, 39, 40, 40´, 40˝) sind bei komplett montierter Getränkezubereitungsmaschine (1) mit diesen Geräteteilen (7, 59, 48) verbunden.

FIG.1

## Getränkezubereitungsmaschine, insbesondere für Kaffee oder Tee

Die Erfindung betrifft eine Getränkezubereitungsmaschlne, insbesondere für Kaffee oder Tee, mit einem das Wasser erhitzenden und in einem Gerätesockel befestigten Durchlauferhitzer, dessen mit einem Wasserrohr in Wärmekontakt stehende Heizeinrichtung über Stromleiter zum einen mit einem Schalter und zum anderen mit einer Anschlußstelle verbunden ist, die die Verbindung zu dem von der Getränkezubereitungsmaschine wegführenden und die Stromversorgung der Maschine sicherstellenden Anschlußkabel herstellt.

Derartige Getränkezubereitungsmaschinen sind im Handel allgemein erhältlich, so auch die in der Programm-Übersicht, Ausgabe Herbst 1987, der Firma Braun Aktiengesellschaft, Frankfurt/Main, dargestellten Getränkezubereitungsmaschinen vom Typ "Braun Aromàster 10 oder 12" (siehe Seiten 30 bis 33). Bei diesen Getränkezubereitungsmaschinen sind der Durchlauferhitzer, der Schalter und gegebenenfalls vorhandene Schaltkreise durch isolierte Stromleiter mit der Anschlußstelle verbunden.

Damit die einzelnen Stromleiter zur Vermeidung von Brand weit genug vom Durchlauferhitzer entfernt sind, werden die einzelnen Stromleiter am Rand der Gehäusewandung oder weit genug unterhalb des Durchlauferhitzers verlegt und dort mittels vorzugsweise am Gehäuse angeformter Abstandshalter ortsfest gehalten. Eine derartig aufwendige, meistens nur von Hand mit großer Sorgfalt durchzuführende Montage ist sehr teuer und arbeitsintensiv.

Eine nicht ordnungsgemäße Verlegung der Kabel, was beispielsweise bei der Produktion durch Unachtsamkeit eines Monteurs oder während einer Reparatur durch nicht geschultes Fachpersonal erfolgen kann, könnte sogar zu einem Brand der Getränkezubereitungsmaschine mit Folgeschäden im Haus führen. Weiterhin ist es von Nachteil, daß bei diesen Kaffeemaschinen die Kosten derartiger, durch eine Isolierhülle geschützter Kupferkabel nicht unerheblich sind, zumal aufgrund der Verlegung der Kabel außerhalb des Durchlauferhitzers längere Strecken an Kabel benötigt werden, die ebenfalls die Kosten erhöhen. Ein weiterer Nachteil besteht darin, daß sich aufgrund der länderabhängigen Sicherheitsvorschriften zur Kabelisolation zwangsweise viele Untertypen von Kaffeemaschinen ergeben, wenn die Kabel nach dem Stand der Technik verlegt werden.

Aufgabe der Erfindung ist es daher, eine Getränkezubereitungsmaschine zu schaffen, die bei kostengünstigerer Herstellung auch noch wesentlich einfacher montiert werden kann und mit der die Brandgefahr noch weiter reduziert wird.

Diese Aufgabe wird erfindungsgemäß dadurch gelöst, daß die Stromleiter aus mehreren aus Blech ausgestanzten Metallbahnen bestehen, daß die Metallbahnen auf einem aus Isolierstoff hergestellten Träger und der Träger selbst im Gerätesockel der Getränkezubereitungsmaschine befestigt sind und daß die dem Durchlauferhitzer, dem Schalter und dem Anschlußkabel zugeordneten Enden der Stromleiter mit diesen Teilen verbunden sind. Durch diese erfindungsgemäße Getränkezubereitungsmaschine wird es nun erstmals möglich, daß auf eine umständliche und aufwendige Verlegung der einzelnen Stromkabel verzichtet werden kann. Durch den mit den Metallbahnen versehenen Träger wird eine äußerst schnelle Montage der Stromleiter in einem einzigen Arbeitsgang ermöglicht (Automatisation der Verdrahtung). Eine Isolierung der Metallbahnen ist nicht erforderlich, kann aber durch Aufbringen einer Isolierschicht, falls dies gewünscht wird, dennoch erfolgen, da diese ortsfest und daher gegeneinander unverschiebbar auf dem Träger befestigt sind, so daß Kurzschlüsse vermieden werden. Dies reduziert auch die Brandgefahr. Durch die erfindungsgemäße Anordnung wird auch erreicht, daß die Stromleiter einen stets konstanten Abstand zur Heizeinrichtung auch dann einhalten, wenn sie unachtsam berührt werden.

Durch die Ausbildung der Leitungen als Metallbahnen ist es möglich, die beispielsweise mit dem Durchlauferhitzer zu verbindenden Enden der Metallbahnen bereits als Kontaktklemmen auszubilden, so daß diese eine innige Verbindung mit den mit dem Durchlauferhitzer zu verbindenden Kontaktzungen ausüben, wenn sie als auf die Kontaktzungen einwirkende Federelemente ausgebildet sind. Die Metallbahnen ermöglichen beispielsweise auch das Einbringen von Gewinde, um anschließend dort mittels Schrauben Anschlußklemmen herzustellen, in denen dann beispielsweise die Stromleiter des Anschlußkabels befestigt werden können. Die Metallbahnen können auch in verschiedenen Ebenen verlaufen.

Um eine besonders raum- und materialsparende Anordnung zu schaffen, ist in einer Weiterbildung der Erfindung vorgesehen, daß der Träger unterhalb des Durchlauferhitzers angeordnet ist und daß er von der den Schalter durchdringenden Gehäusewand bis zu der das Anschlußkabel durchdringenden Gehäusewand verläuft. Durch diese Anordnung wird auf dem kürzesten Wege eine Verbindung vom Schalter zum Anschlußkabel hergestellt. Dabei ist es von Vorteil, wenn der Träger von einem Joch gebildet wird, das sich an gegenüberliegenden Enden am Gerätesockel der Getränkezubereitungsmaschine abstützt. Durch diese

Weiterbildung der Erfindung wird erreicht, daß der Träger nicht nur als Trageteil für die Stromleiter, sondern auch als radiale Abstützung für den Gehäusesockel dient. Hierdurch können besonders dünnwandige Wandstärken im Bereich des Gerätesockels verwendet werden, was ebenfalls die Kosten der Getränkezubereitungsmaschine reduziert.

Besonders vorteilhaft ist es, daß der Träger als Trageteil weiterer elektronischer Bauteile, wie Lampen, Schalter oder elektronische Schaltkreise, dient. Durch die zusätzliche Aufnahme von elektrischen oder elektronischen Bauteilen auf dem Träger wird die erfindungsgemäße Getränkezubereitungsmaschine in ihrer Montage weiterhin wesentlich vereinfacht; den derartige Bauteile können, bevor der Träger in der Maschine eingesetzt wird, auf diesem bereits vormontiert sein, was aufgrund der besseren Zugänglichkeit zum Träger die Montage der Bauteile erleichtert.

Um eine schnelle Verbindung der Enden der Stromleiter zu den elektrischen Bauteilen herzustellen, sind diese Enden der Stromleiter gleichzeitig als Kontaktklemmen oder -fahnen ausgebildet. Die Herstellung der Enden als Kontaktklemmen oder -fahnen ist erfindungsgemäß ohne zusätzlichen Kostenaufwand möglich, da sie während der ohnehin zum Bearbeiten der Metallbahnen erforderlichen Stanz- und Biegevorgänge gleichzeitig mitbearbeitet werden können. Somit werden die im Handel angebotenen Kontaktfahnen bzw. -klemmen nicht mehr benötigt, was zur Montagevereinfachung und Kostensenkung führt.

Eine einfache und schnelle, aber stets die gleichen erforderlichen Einbaumaße einhaltende Montage wird dadurch erreicht, daß die den Durchlauferhitzer und den Träger umschließende Gehäusewand im wesentlichen ringförmig ausgebildet ist und daß zumindest das eine Ende des Trägers Rastelemente bzw. Ausnehmungen aufweist, die in an der Gehäusewand entsprechend ausgebildete Ausnehmungen bzw. Rastelemente eingreifen. Da sowohl der Träger als auch das Gehäuse der Getränkezubereitungsmaschine aus Kunststoff ausgeformt sind, können derartige Ausnehmungen bzw. Rastelemente ohne Kostenmehraufwand an diesen Teilen mitangeformt werden. Bei dieser Befestigung ist es von Vorteil, wenn der Träger nur einseitig über Rastelemente mit dem Gehäuse des Gerätesockels verbunden ist, damit die bei der Erwärmung durch den Durchlauferhitzer im Bereich des Gerätesockels auftretenden Längenänderungen nicht zu Verspannung zwischen diesen Teilen führen. Bei dieser Befestigungsanordnung wird der Träger auf der nicht mit dem Gehäuse über Rastelemente verbundenen Seite beispielsweise von den an dem Durchlauferhitzer befestigten Stromleitern gehalten.

Ein besonders einfaches Verfahren zur Herstellung des erfindungsgemäßen Stromleiters wird dadurch erreicht, daß der Träger aus Kunststoff geformt ist, daß die einzelnen Metallbahnen aus einem Blech ausgestanzt werden und über einzelne Verbindungsstege miteinander verbunden sind, daß die so ausgestanzten Metallbahnen auf den Träger aufgesetzt und mit diesem an einzelnen Stellen verschweißt werden und daß anschließend die Verbindungsstege von den einzelnen Metallbahnen abgetrennt werden. Durch dieses Verfahren läßt sich der nach der Erfindung beschriebene Stromleiter auf besonders einfache Weise kostengünstig herstellen. Die Verbindungsstege dienen während der Montage als Halt der einzelnen Metallbahnen untereinander, die, sobald die ausgestanzte Leiterschar der Metallbahnen auf den Träger aufgesetzt und mit diesem befestigt sind, voneinander getrennt werden, damit die einzelnen Strompfade später im Betrieb nicht kurzgeschlossen sind. Werden die Verbindungsstege nur einseitig abgetrennt, so müssen sie noch anschließend, um einen ausreichend großen Abstand zwischen den einzelnen Metallbahnen zu erhalten, umgebogen werden. Um Material einzusparen, ist es aber auch möglich, die Verbindungsstege beidseitig abzutrennen. Hierbei entfällt dann der bei der einseitigen Abtrennung erforderliche Biegevorgang. Damit eine Abtrennung der Verbindungsstege von den mit dem Träger verbundenen Metallbahnen leicht möglich ist, werden während des Spritzvorgangs des Trägers in Höhe der Verbindungsstege im Träger Durchgangsöffnungen angeformt, um eine Zugänglichkeit eines Trennstempels zu den Stegen zu gewährleisten.

Eine weitere Vereinfachung der Montage der Getränkezubereitungsmaschine wird nach einer Weiterbildung der Erfindung dadurch erreicht, daß auf dem so vorgefertigten Träger elektronische Bauteile aufgesetzt und mit den zugeordneten Kontaktanschlüssen der Metallbahnen verbunden werden. Diese Vormontage verkürzt die Montage der Getränkezubereitungsmaschine erheblich, da aufgrund der besseren Zugänglichkeit des Trägers eine Montage der elektrischen Bauteile auf dem Träger wesentlich einfacher ist als dies der Fall in dem schlecht zugänglichen Gehäuse der Getränkezubereitungsmaschine wäre. Ein weiterer Vorteil dieser Vormontage besteht darin, daß der komplette Bausatz, bevor er in die Getränkezubereitungsmaschine eingesetzt wird, auf elektrische und mechanische Funktionsfähigkeit überprüft werden kann. Erfolgt dies erst nach Einbau der elektronischen Bauteile in die Getränkezubereitungsmaschine, so muß bei einem später festgestellten Defekt der komplette Träger nochmals aus der Maschine entfernt werden. Dies wäre aufwendig und zu arbeitsintensiv. Erst nach der technischen Prüfung wird dann also der fertig vormontierte Träger in die bereits mit dem Durchlauferhitzer vormontierte Getränkezubereitungsmaschine eingesetzt, und die entsprechenden Anschlußkabel des Durchlauferhitzers werden mit den entsprechenden Kontaktklemmen oder -fahnen der Metallbahnen am Träger verbunden. Auch dann, wenn die technische Funktionsüberprüfung der fertig montierten Getränkezubereitungsmaschine Fehler erkennen läßt, ist es demnach leichter als bei herkömmlichen Kaffeemaschinen, den Träger aus der Getränkezubereitungsmaschine nochmals auszubauen, da lediglich die einzelnen Kontaktstellen von den zugehörigen Anschlußstellen entfernt und der Träger aus seiner Rastverbindung gelöst werden muß.

Ein Ausführungsbeispiel der Erfindung ist in der Zeichnung dargestellt und wird im folgenden näher beschrieben. Es zeigen:

Fig. 1 Draufsicht von unten her auf den Gerätesockel einer nach der Erfindung fertig montierten Getränkezubereitungsmaschine, bei der der Deckel entfernt wurde,

Fig. 2 Teillängsschnitt gemäß der Schnittführung II-II in Fig. 1, wobei der Schnitt so gedreht wurde, daß die Oberseite der Warmhalteplatte nach oben gerichtet ist;

Fig. 3 Draufsicht auf den Träger komplett in Richtung X gemäß Fig. 2 und

Fig. 4 Längsschnitt durch den Träger gemäß der Schnittführung IV-IV in Fig. 3.

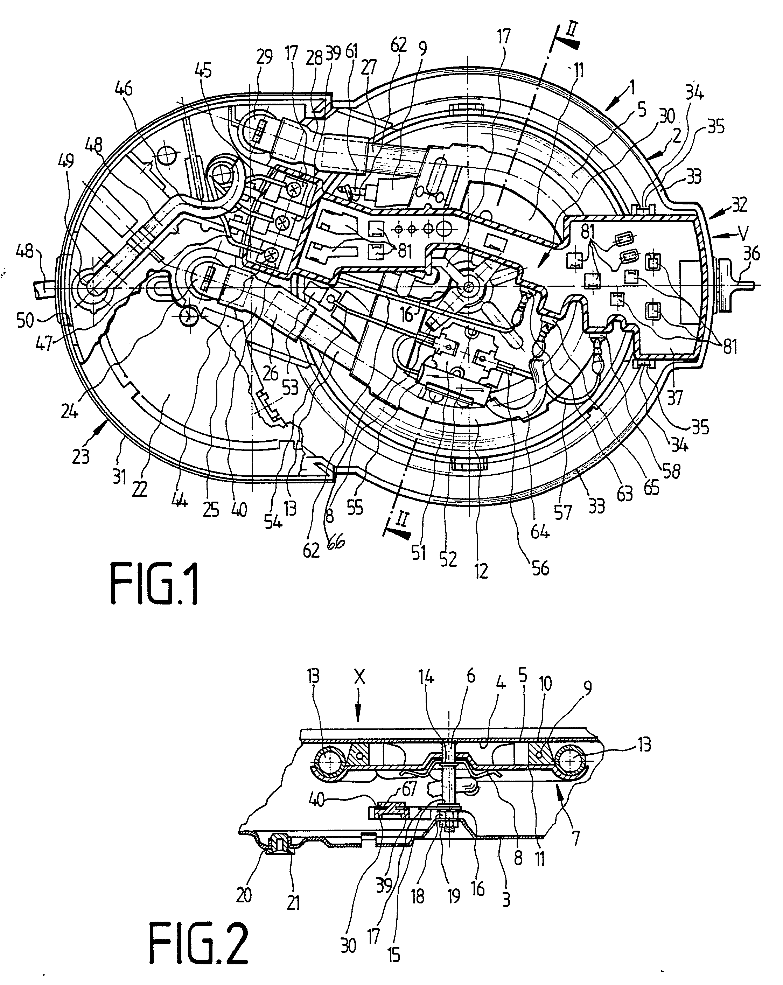

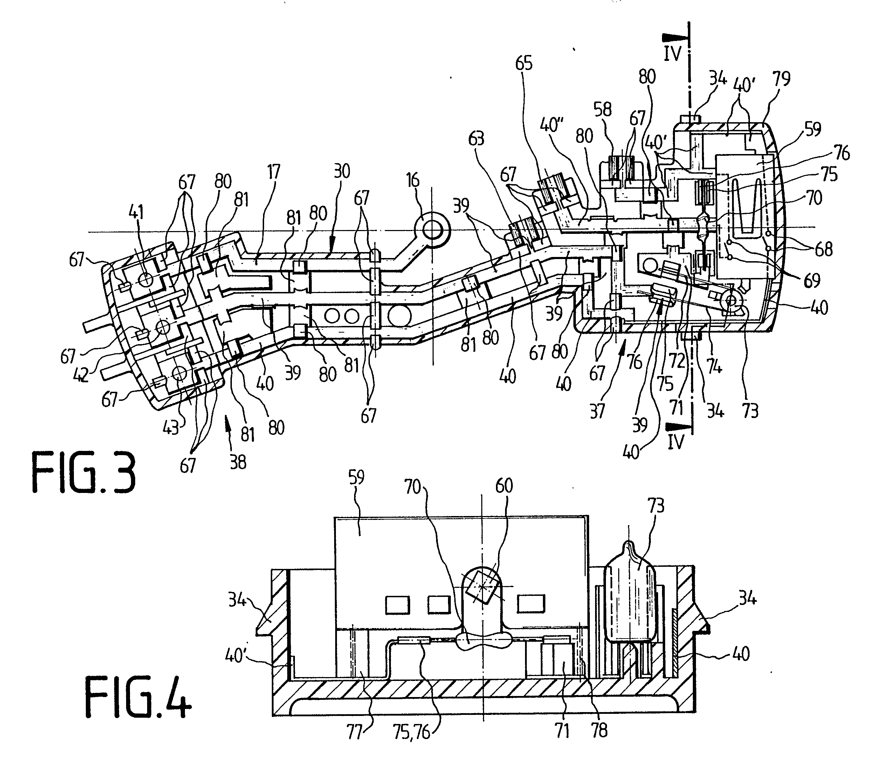

Zur Vermeidung von Wiederholungen wurden in den Fig. 1 und 4 für entsprechend gleiche Bauteile gleiche Bezugszeichen gewählt.

In Fig. 1 ist die Unterseite eines Gerätesockels 2 einer Kaffeemaschine in Draufsicht dargestellt. Um an der Unterseite alle Einzelheiten erkennen zu können, wurde in dieser Unteransicht der in Fig. 2 dargestellte, von unten her abschließende Deckel 3 entfernt. Der allgemeine Aufbau der Kaffeemaschine 1 entspricht dem in der Beschreibungseinleitung als Stand der Technik angegebenen Gerät, so daß zur Vereinfachung nur auf den Bereich des Gerätesockels 2 eingegangen wird.

In Fig. 2 ist an der Unterseite 4 am Gerätesockel 2 der Kaffeemaschine 1 an der Warmhalteplatte 5 ein nach unten gerichteter Zapfen 6 befestigt, der einen Durchlauferhitzer 7 trägt und der dafür sorgt, daß der Durchlauferhitzer 7 mittels eines Federelements 8, das sich über einen am Zapfen 6 ausgebildeten Ringbund 14 abstützt, gegen die Unterseite 4 der Warmhalteplatte 5 stets mit Vorspannung angepreßt wird, um einen besonders guten Wärmeübergang vom Durchlauferhitzer 7 zur Warmhalteplatte 5 zu gewährleisten. Die Warmhalteplatte 5 dient zum Abstellen einer nicht dargestellten, vorzugsweise aus Glas hergestellten Kaffee- oder Teekanne, an deren oberen Ende sich nach oben weiterhin ein im Gehäuse der Kaffeemaschine 1 schwenkbar gelagerte Filter (nicht dargestellt) anschließt.

Der Durchlauferhitzer 7 besteht aus einer elektrisch beheizbaren Heizeinrichtung 9, deren eine Fläche bildende Oberseite 10 an der Unterseite 4 der Warmhalteplatte 5 anliegt. Die Heizeinrichtung 9 stützt sich auf einer Platte 11 ab, die an ihrem radial äußeren Umfang eine Sicke 12 zur Aufnahme eines Wasserrohrs 13 aufweist. Das Wasserrohr 13 und die Heizeinrichtung 9 liegen also zwischen der Warmhalteplatte 5 und der Platte 11 und sind zur besseren Wärmeübertragung mit der Platte 11 verlötet. Der Durchmesser des Wasserrohrs 13 ist so bemessen, daß ein Abstand zwischen diesem und der Unterseite 4 der Warmhalteplatte 5 besteht. Wie aus Fig. 1 deutlich hervorgeht, verläuft das Wasserrohr 13 parallel zum Durchlauferhitzer 7, berührt diesen und bildet im wesentlichen in Draufsicht ein liegendes U.

In Fig. 2 schließt sich unterhalb des Federelements 8 am Zapfen 6 ein weiterer Ringbund 15 an, an dem das Ende 16 des Stromleiters 17 anliegt und welches von einer am Ende des Zapfens 6 aufgeschraubten Mutter 18 dort ortsfest gehalten wird. An die Mutter 18 schließt sich nach unten der Deckel 3 an, der durch eine weitere, auf das Ende des Zapfens 6 aufgeschraubte Mutter 19 gegen die Mutter 18 gedrückt wird. Hierdurch verschließt der Deckel 3 den Gerätesockel 2 von unten her. Damit die Kaffeemaschine 1 rutschfest auf einer Arbeitsplatte abgestellt werden kann, sind in Bohrungen 20 des Deckels 3 Gummistopfen 21 eingeknöpft.

Wie aus Fig. 1 entnehmbar ist, schließt sich an den linken, im wesentlichen halbkreisförmigen Abschnitt 22 des Gerätesockels 2, in die Zeichenebene verlaufend, ein Wassertank 23 an, dessen am Boden ausgebildeter Auslaßstutzen 24 mittels eines Schlauchstückes 25 mit der Einlaufseite 26 des Wasserrohrs 13 des Durchlauferhitzers 7 verbunden ist. Die Auslaufseite 27 dieses Wasserrohrs 13 ist ebenfalls über ein Schlauchstück 28 mit einem Steigrohr 29 verbunden, das das in Betrieb der Kaffeemaschine 1 im Durchlauferhitzer 7 erhitzte Wasser zu einem gemäß Fig. 2 oberhalb der Warmhalteplatte 5 ausgebildeten, in der Zeichnung nicht dargestellten Filter leitet.

Der in Fig. 1 bis 3 dargestellte Träger 30 erstreckt sich unterhalb des Durchlauferhitzers 7 quer vom einen Ende des Gerätesockels 2, welches die Vorderseite V der Kaffeemaschine bildet, bis zum Beginn des Bodens vom Wassertank 23 (Fig. 2). An den Fuß 31 des Wassertanks 23 schließt sich der die kreisförmige Warmhalteplatte umgebende, parallel zu dieser verlaufende Gerätesockel 2 an. Der Gerätesockel 2 und der Fuß 31 liegen auf gleicher Höhe und sind von dem Deckel 3 nach unten hin abgedeckt, so daß ein Zugriff zur Elektrik ausgeschlossen ist. Der Deckel dient weiterhin im Notfall auch als Auffangschale, wenn eventuell einmal alle Schmelzsicherungen und der Thermostat 51 ausfallen und ann der Durchlauferhitzer 7 durchschmilzt (vorzugsweise nur bei aus Aluminium hergestellten Durchlauferhitzern 7).

In Fig. 1 ragt das rechte Ende 37 des Trägers 30 in eine am Gerätesockel 2 ausgebildete, radial hervorspringende Ausnehmung 32, so daß der Träger 30 in diesem Bereich radial und seitlich durch die Gehäusewand 33 des Gerätesockels 2 ortsfest gehalten wird. Damit der Träger 30 nicht auf den Deckel 3 fällt, ist er über Rastelemente 34 in am Gehäusesockel 2 ausgebildeten Ausnehmungen 35 verrastet. Weiterhin wird er noch über den an ihm befestigten Stromleiter 17 auf dieser Höhe und parallel zum Deckel 3 gehalten.

An der Vorderseite V der Kaffeemaschine 1 steht an der Ausnehmung 32 des Gerätesockels 2 ein Betätigungsknopf 36 hervor, dessen in der Zeichnung nicht dargestellte Welle die Gehäusewand 33 durchdringt und in eine viereckige Aufnahmebohrung 60 des Drehgliedes eines Schalters 59 hineinragt und dort befestigt ist (Fig. 3 und 4).

An dem in Fig. 1 und 3 linken Ende 38 des Trägers 30 sind an den einzelnen Metallbahnen 17, 39, 40 Gewindebohrungen als Anschlußstellen 41, 42, 43 ausgebildet, in die von dem Deckel 3 her Kreuzschlitzschrauben 44 eingeschraubt sind, die die Enden der Leiter 45, 46, 47 des mit einer Stromquelle verbindbaren Anschlußkabels 48 fest mit den Metallbahnen 17, 39, 40 zusammenhalten. Die Metallbahn 17 dient als Schutzleiter, die Metallbahn 39 dient als Null-Leiter, und die Metallbahn 40 dient als Phasen-Leiter. Der Null-Leiter 39 und der Phasen-Leiter 40 sind bei Umpolung vertauscht. Das Anschlußkabel 48 führt am Boden des Wassertanks 23 entlang, durchdringt den Boden über die Bohrung 49, verläuft in die Zeichenebene nach unten (Fig. 1) und verläßt schließlich seitlich über den im Gehäuse des Wassertanks 23 angebrachten Schlitz 50 die Kaffeemaschine 1 nach außen.

An der Platte 11 des Durchlauferhitzers 7 ist unterhalb ein Thermostat 51 befestigt, der bei Überhitzung des Durchlauferhitzers 7 die Stromzufuhr zu diesem unterbricht bzw. bei zu niedriger Temperatur die Stromzufuhr wieder zum Durchlauferhitzer 7 freigibt. Der Thermostat 51 regelt die Temperatur des Durchlauferhitzers 7 und somit auch die Temperatur an der Warmhalteplatte 5, also auch die Temperatur des Brühgetränks. Weiterhin ist am Thermostat 51 ein Heizwiderstand 52 befestigt, der, wenn er über den Betätigungsknopf 36 zugeschaltet wird, die Ausschaltzeit des Thermostats 51 verlängert, d.h., der Durchlauferhitzer 7 kühlt mehr ab, wenn der Heizwiderstand 52 nicht eingeschaltet ist. Der Heizwiderstand 52 sorgt demnach dafür, daß insbesondere bei kleinen warmzuhaltenden Getränkemengen die Wärmezufuhr über die Warmhalteplatte 5 zur Kaffeekanne geringer ist. Eine Überhitzung kleiner Kaffeemengen während der Warmhaltung kann somit nicht erfolgen.

Der Anschluß 53 der Heizeinrichtung 9 ist in Fig. 1 über das Kabel 54 mit dem Ausgangsanschluß 55 des Thermostaten 51 verbunden. Der Eingangsanschluß 56 ist über die Stromleitung 57 mit der Kontaktklemme 58 verbunden, die über den Leiter 40' mit dem elektrischen Schalter 59 verbunden ist. Der Anschluß 61 der Heizeinrichtung 9 ist über das Kabel 62 mit der Kontaktklemme 63 verbunden, durch die der Anschluß zum Null-Leiter 39 hergestellt wird (Fig. 3). Der Heizwiderstand 52 ist über das Kabel 64 mit der Kontaktklemme 65 verbunden, während der Ausgang des Heizwiderstandes 52 über die Verbindungsleitung 66 mit dem Ausgangskontakt 55 verbunden ist. Zwischen dem Anschluß 61 der Heizeinrichtung 9 und der Kontaktklemme 63 ist noch am Kabel 62 eine in der Zeichnung nicht dargestellte Schmelzsicherung (Efen-Sicherung) zwischengeschaltet, die in Wärmekontakt mit der Platte 11 des Durchlauferhitzers 7 steht und die bei unzulässig hoher Erwärmung durchschmilzt, so daß dann die Stromzufuhr zur Heizeinrichtung 9 unterbrochen ist.

In Fig. 3 ist der Verlauf der einzelnen Metallbahnen 17, 39, 40, 40', 40" dargestellt, die im eingebauten Zustand des Trägers 30 dem Durchlauferhitzer 7 zugewandt sind (Fig 1). In Fig. 3 sind die einzelnen Metallbahnen 17, 39, 40, 40', 40" und 71 auf dem Träger mittels der Schweißstellen 67 verschweißt. Die Schweißstellen 67 werden durch vom Träger 30 angeformte und gegenüber den Metallbahnen 17, 39, 40, 40', 40" hervorstehende Zapfen gebildet, die, nachdem diese Metallbahnen auf dem Träger 30 aufgesetzt sind, durch Wärmeeinwirkung derart plastisch verformt werden, daß verformtes Material auf der Oberfläche der Metallbahnen aufliegt (siehe Fig. 2) und die Metallbahnen 17, 39, 40, 40', 40" und 71 and den Träger 30 bindet.

Der Schalter 59 weist zwei über eine Exzenterscheibe (in der Zeichnung nicht dargestellt) hintereinander betätigbare Schaltelemente 68, 69 auf, von denen das erste Schaltelement im kurzgeschlossenen Zustand eine Verbindung von dem Phasen-Leiter 40 zur Metallbahn 40' herstellt, während das zweite Schaltelement 69 im kurzgeschlossenen Zustand eine Verbindung von der Metallbahn 40' zur Metallbahn 40" herstellt und eine Zuschaltung des Heizwiderstandes 52 ermöglicht. Die Metallbahn 40' ist über einen Strombegrenzungswiderstand 70 mit dem Stromleiter 71 verbunden, an den das eine Kontaktende 72 einer Glimmlampe 73 angeheftet ist. Das andere Kontaktende 74 der Glimmlampe 73 ist an den Phasen-Leiter 40 angeheftet. Die Anheftung der Kontaktenden 72, 74 erfolgt dermaßen, daß an den Enden der Stromleiter 71, 39 Kontaktfahnen 75, 76 hervorstehen, zwischen denen dann das Kontaktende 74 eingeklemmt wird. Auf die gleiche Art wurde der Strombegrenzungswiderstand 70 mit der Metallbahn 40' und dem Stromleiter 71 verbunden.

Die zum Schalter 59 führenden Enden der Metallbahnen 40, 40' und 40" sind als federnde Kontaktklemmen 77 ausgebildet, in die die aus dem Schalter 59 herausragenden Kontaktzungen 78 eingeklipst sind, so daß hierdurch gleichzeitig der Schalter 59 ortsfest auf dem Träger 30 befestigt ist. Die Metallbahnen 40, 40', die am Rand 79 des rechten Endes 37 des Trägers 30 verlaufen, sind zum Zwecke eines ausreichenden Abstands gegenüber den Kontaktenden 72, 74 der Lampe 73 im Bereich der Lampe 73 hochgebogen und verlaufen parallel zum Rand 79.

Die Herstellung des kompletten Träger 30 ist folgende:
Zunächst wird der Träger 30 in einer Werkzeugform aus Kunststoff gespritzt. Unabhängig davon werden in einem Folgewerkzeug die Metallbahnen 17, 39, 40, 40', 40" und 71 aus Blech ausgestanzt, und die Kontaktenden werden zu Kontaktklemmen 77, 58, 63 und 65 bzw. Kontaktzungen umgeformt. Anschließend werden die am linken Ende 38 vor-handenen, als Anschlußstellen vorgesehenen Boh-rungen zu Gewindebohrungen 41, 42 und 43 umge-staltet. Bei dem nun fertig bearbeiteten Metallgitter sind die einzelnen Metallbahnen 17, 39, 40, 40', 40" und 71 noch über die Verbindungsstege 80 miteinander verbunden. Nun wird das aus den einzelnen Metall bahnen 17, 39, 40, 40', 40" und 71 bestehende Metallgitter auf den Träger 30 aufgesetzt (Fig. 3) und durch Schweißen an den einzelnen Schweißstellen 67 mit dem Träger 30 verbunden. Anschließend werden in einem einzigen Stanzvorgang die Stege 80 einseitig von den Metalleitern 17, 39, 40 und 71 getrennt und derart umgebogen, daß die Stege 80 auf den noch mit ihnen verbundenen Metallbahnen zu liegen kommen. Die Metallbahnen 17, 39, 40, 40', 40" und 71 sind nun voneinander getrennt, d.h., es besteht über die Stege 80 keine Stromverbindung mehr. Um ein automatisches Abtrennen der Stege 80 zu ermöglichen, sind am Träger 30 Durchgangslöcher 81 vorgesehen. Anschließend werden der Schalter 59, der Strombegrenzungswiderstand 70 und die Glimmlampe 23 mit den entsprechen den Anschlußkontakten verbunden. Nun werden in die Gewindebohrungen 41, 42, 43 die Kreuzschlitzschrauben 44 (Fig. 1) eingeschraubt. Der Träger 30 ist komplett vormontiert.

Die Montage des komplett so vormontierten Trägers 30 in die Kaffeemaschine 1 ist folgende:
Der komplette Träger 30 wird, wie in Fig. 1 dargestellt, in den Gerätesockel 2 so eingeführt, daß die Rastelemente 34 in die Ausnehmungen 35 einrasten. Hierbei ist darauf zu achten, daß die Metallbahnen 17, 39, 40 zum Durchlauferhitzer 7 zeigen. Dabei wird der Schutzleiter 17 auf den Zapfen 6 aufgesetzt und mittels der Mutter 18 gegen den Ringbund 15 verschraubt. Nun werden die Leiter 45, 46, 47 zwischen den Metallbahnen 39 und 40 durch die Kreuzschlitzschrauben 44 verschraubt, und das Kabel 62 wird mit der Kontaktklemme 63, als Kabel 64 mit der Kontaktklemme 65 und das Kabel 57 mit der Kontaktklemme 58 verbunden. Zum Schluß wird noch der Betätigungsknopf 36 von außen auf die Ausnehmung 32 so aufgesetzt, daß seine in der Zeichnung nicht dargestellte Welle in die Aufnahmebohrung 60 des Schalters 59 eingreift und dort verrastet. Der Betätigungsknopf 36 ist drehfest mit dem Schalter 59 verbunden. Schließlich wird noch der Deckel 3 von unten auf den offenen Gerätesockel 2 aufgesetzt und mittels der Mutter 19 auf dem Zapfen 6 befestigt. Die Verdrahtung der Kaffeemaschine ist bereits schon beendet.

Die Wirkungsweise der Kaffeemaschine ist folgende:
Wird die Kaffeemaschine 1 über den Schalter 59 in die erste Schaltstellung gebracht (Fig. 1), so werden die Kontakte des ersten Schaltelements 68 miteinander verbunden (Fig. 3), und der Strom fließt über die Metallbahn 40 zur Metallbahn 40'. Von dort fließt der Strom über das Kabel 57 zum Thermostaten 51 und von dort über das Kabel 54 zum Anschluß 53 der Heizeinrichtung 9. Vom Anschluß 53 fließt der Strom über die Heizwendel (nicht dargestellt) zum Anschluß 61, anschließend über die Efen-Sicherung zur Kontaktklemme 63 und von dort über die Metallbahn 39 zurück zur Null-Leiter-Anschlußstelle 42. Beim Einschalten der Kaffeemaschine 1 fließt auch ein Strom über die Metallbahn 40 und den Strombegrenzungswiderstand 70 zur Glimmlampe 73 und zurück über die Metalbahn 39. Die Glimmlampe 73 leuchtet also bei eingeschaltetem Schaltelement 68, um dem Benutzer den Einschaltzustand der Kaffeemaschine 1 zu zeigen.

Bei Zuschaltung des zweiten Schaltelements 69 fließt zusätzlich noch ein Strom von der Metalbahn 40' über die Metalbahn 40" zur Kontaktklemme 65, von wo er über das Kabel 64 zum Heizwiderstand 52 und von dort über eine Verbindungsleitung zum Ausgangsanschluß 55 des Thermostaten 51 fließt. Ein Stromfluß über den Heizwiderstand 52 ist jedoch nur möglich, wenn der Thermostat 51 ausgeschaltet ist. Ist er nämlich eingeschaltet, so fließt der Strom direkt über den Thermostaten 51, d.h., die Heizeinrichtung 52 wird nicht erwärmt.

Die Zuschaltung des zweiten Schaltelements 69 dient also dazu, daß im Warmhaltebereich bei einer geringen Brühgetränkemenge die Flüssigkeit nicht allzu stark erhitzt wird. Solange beim Aufbrühen des Kaffeemehls Wasser im Durchlauferhitzer 7 aufgeheizt wird, taktet der Thermostat 51 nicht; erst dann, wenn das Wasser durchgelaufen ist, erhitzt sich der Durchlauferhitzer 7 über einen unzulässigen Temperaturbereich, so daß der Thermostat 51 den Strom unterbricht. Unterschreitet die Temperatur des Durchlauferhitzers 7 einen Minimalwert, so schaltet der Thermostat 51 ein, da dieser ebenfalls entsprechend stark abgekühlt ist, und der Durchlauferhitzer 7 heizt wieder auf.

## Ansprüche

1. Getränkezubereitungsmaschine (1), insbesondere für Kaffee oder Tee, mit einem das Wasser erhitzenden und in einem Gerätesockel (2) befestigten Durchlauferhitzer (7), dessen mit einem Wasserrohr (13) in Wärmekontakt stehende Heizeinrichtung (9) über Stromleiter (17, 39, 40, 40', 40") zum einen mit einem Schalter (59) und zum anderen mit einer Anschlußstelle (41, 42, 43) verbunden ist, die die Verbindung zu dem von der Getränkezubereitungsmaschine (1) wegführenden und die Stromversorgung der Maschine sicherstellenden Anschlußkabel (48) herstellt, **dadurch gekennzeichnet,** daß die Stromleiter aus mehreren aus Blech ausgestanzten Metallbahnen (17, 39, 40, 40', 40") bestehen, daß die Metallbahnen auf einem aus Isolierstoff hergestellten Träger (30) und der Träger (30) selbst im Gerätesockel (2) der Getränkezubereitungsmaschine (1) befestigt sind und daß die dem Durchlauferhitzer (7), dem Schalter (59) und dem Anschlußkabel (48) zugeordneten Enden der Stromleiter (17, 39, 40, 40', 40") mit diesen Teilen verbunden sind.

2. Getränkezubereitungsmaschine nach Anspruch 1, **dadurch gekennzeichnet,** daß der Träger (30) unterhalb des Durchlauferhitzers (7) quer durch den Gerätesockel (2) verläuft.

3. Getränkezubereitungsmaschine nach Anspruch 2, **dadurch gekennzeichnet,** daß der Träger (30) von einem Joch gebildet wird, das sich an gegenüberliegenden Enden am Gerätesockel (2) der Getränkezubereitungsmaschine (1) abstützt und den Schalter (59) mit dem Anschlußkabel (48) verbindet.

4. Getränkezubereitungsmaschine nach Anspruch 1, 2 oder 3 **dadurch gekennzeichnet,** daß der Träger (30) als Trageteil weiterer elektronischer Bauteile, wie Lampen (73), Schalter (59) oder elektronische Schaltkreise, dient.

5. Getränkezubereitungsmaschine nach Anspruch 1, **dadurch gekennzeichnet,** daß ein Teil der Enden der Stromleiter (39, 40, 40', 40") gleichzeitig als Kontaktklemmen oder -fahnen (58, 63, 65, 77) ausgebildet sind.

6. Getränkezubereitungsmaschine nach Anspruch 2, **dadurch gekennzeichnet,** daß die den Durchlauferhitzer (7) und den Träger (30) umschließende Gehäusewand (33) im wesentlichen ringförmig ausgebildet ist und daß zumindestens das eine Ende (37) des Trägers (30) Rastelemente (34) bzw. Ausnehmungen aufweist, die in an der Gehäusewand (33) entsprechend ausgebildete Ausnehmungen (35) bzw. Rastelemente eingreifen.

7. Verfahren zur Herstellung des Stromleiters nach Anspruch 1, **dadurch gekennzeichnet,** daß der Träger (30) aus Kunststoff geformt wird, daß die einzelnen Metallbahnen (17, 39, 40, 40', 40", 71) aus einem Blech ausgestanzt werden und über einzelne Verbindungsstege (80) miteinander verbunden sind, daß die so ausgestanzten Metallbahnen auf den Träger (30) aufgesetzt und mit diesem an einzelnen Schweißstellen (67) verschweißt werden und daß anschließend die Verbindungsstege (80) von den einzelnen Metallbahnen abgetrennt werden.

8. Verfahren nach Anspruch 7, **dadurch gekennzeichnet,** daß die Verbindungsstege (80) nur einseitig abgetrennt und anschließend umgebogen werden.

9. Verfahren nach Anspruch 7 oder 8, **dadurch gekennzeichnet,** daß während des Spritzvorgangs des Trägers (30) im Bereich der Verbindungsstege (80) im Träger (30) Durchgangslöcher (81) ausgeformt werden.

10. Verfahren nach Anspruch 7, **dadurch gekennzeichnet,** daß auf dem so vorgefertigten Träger (30) elektronische Bauteile (59, 70, 73) aufgesetzt und mit entsprechend zugeordneten Kontaktanschlüssen (75, 76, 77) der Metallbahnen (39, 40, 40', 40") verbunden werden.

11. Verfahren nach Anspruch 10, **dadurch gekennzeichnet,** daß der fertig vormontierte Träger in die bereits mit dem Durchlauferhitzer (7) vormontierte Getränkezubereitungsmaschine (1) eingesetzt wird und daß die entsprechenden Anschlußkabel (57, 62, 64) des Durchlauferhitzers (7) mit den entsprechenden Kontaktklemmen oder -fahnen (58, 63, 65) der Me-

tailbahnen (39, 40$'$, 40$''$) am Träger (30) verbunden werden.

05445

FIG.1

FIG.2

05445

FIG.3

FIG.4